# EUROPÄISCHE PATENTSCHRIFT

(11) **EP 4 050 345 B1**
(45) Veröffentlichungstag und Bekanntmachung des Hinweises auf die Patenterteilung: **26.02.2025**
(21) Anmeldenummer: 21159549.1
(22) Anmeldetag: 26.02.2021
(51) Int. Cl.: G01Q 10/04, G01Q 20/04, G01Q 70/14, G01Q 20/02, G01Q 60/32, G01N 29/06

(54) **MESSSONDE ZUM UNTERSUCHEN VON OBERFLÄCHENBEREICHEN**
MEASURING PROBE FOR INSPECTING SURFACE AREAS
SONDE DE MESURE PERMETTANT D'EXAMINER DES ZONES DE SURFACE

(43) Veröffentlichungstag der Anmeldung: 31.08.2022
(73) Patentinhaber: Materials Center Leoben Forschung GmbH, 8700 Leoben (AT)
(72) Erfinder: HAMMER, René, 8010 Graz (AT); BEDOYA-MARTINEZ, Olga Natalia, 8010 Graz (AT)
(74) Vertreter: Wirnsberger & Lerchbaum Patentanwälte OG

(56) Entgegenhaltungen:
- WO-A1-2021/028174
- US-A- 5 319 977
- US-B1- 9 482 691

## Beschreibung

Die Erfindung betrifft eine Messsonde zum Untersuchen von Oberflächenbereichen eines Objektes, insbesondere durch Abtasten von Oberflächenbereichen des Objektes, umfassend ein Substrat, eine Spitze zum Wechselwirken mit dem Objekt und einen Wandler zur Aussendung von akustischen Signalen in das Objekt, wobei das Substrat die Spitze und den Wandler trägt.

Des Weiteren betrifft die Erfindung ein Rasterkraftmikroskopieverfahren zum Untersuchen von Oberflächenbereichen eines Objektes, insbesondere mit einer Vorrichtung der vorstehenden Art, wobei eine Messsonde, welche ein Substrat, einen Wandler und eine Spitze umfasst, durch das einseitig befestigte Substrat und die daran angeordnete Spitze mit der Oberfläche des Objektes in Wechselwirkung tritt, während eine Anregungsquelle auf den Wandler gerichtet ist.

Aus dem Stand der Technik ist neben Vorrichtungen zur bildgebenden Untersuchung eine Vielzahl von weiteren Vorrichtungen bekannt, mit welchen Oberflächenbereiche eines Objektes untersucht werden können.

In diesem Zusammenhang kommen auch Vorrichtungen zur Anwendung, die zur Charakterisierung entweder mit der Oberfläche in Wechselwirkung treten, wie beispielsweise die Rasterkraftmikroskopie zur Untersuchung der Topografie eines Objektes, oder durch Aussenden von akustischen Signalen eine Messung von oberflächennahen Bulkeigenschaften ermöglichen, wie es aus der akustischen Mikroskopie bekannt ist. Mit der akustischen Rasterkraftmikroskopie wurden diese vorstehenden Mikroskopieverfahren kombiniert und eine Messung von sowohl Topografie als auch oberflächennahen Bulkeigenschaften ermöglicht, wobei die Messung bei einer großen Bandbreite von Objekten zur Anwendung kommt und zerstörungsfrei arbeitet. Hierzu werden Messsonden mit einem Federbalken und einer darauf angebrachten kleinen Spitze, welche einen Krümmungsradius von nur wenigen Nanometern aufweist, verwendet, wodurch die Verbiegung des Federbalkens direkte Rückschlüsse auf die zwischen Spitze und Objekt wirkenden physikalischen Kräfte zulässt. Hierbei werden die Biegemoden des Federbalkens einer Messsonde genutzt und dieser selbst zum Schwingen angeregt, sodass dessen Eigenresonanzfrequenz, welche bei einem weniger als einen Millimeter langen Federbalken für gewöhnlich im Ultraschallbereich liegt, über die Spitze der Messsonde auf das zu untersuchende Objekt übertragen wird und *vice versa.* Für gewöhnlich ergibt sich dabei eine Übertragung von Frequenzen im Bereich von einigen Kilohertz (kHz) bis zu wenigen Megahertz (MHz). In der Ultraschall-Kraftmikroskopie konzentriert man sich genau auf diesen Frequenzbereich und zieht neben den Biegemoden des Federbalkens und der damit verbundenen Eigenresonanzfrequenz auch externe Ultraschallquellen in Betracht.

So können beispielsweise elektrisch anregbare Wandler aus piezoelektrischen Materialien verbaut werden, um die Messsonde in Schwingung zu versetzen. Hierdurch wird der Frequenzbereich der übertragenen Schwingungen weiter angehoben, sodass Frequenzen zwischen mehreren MHz und wenigen Gigahertz (GHz) von der Messsonde auf das zu untersuchende Objekt übertragen werden können. Wie in der DE 103 21 931 A1 beschrieben, kann ein solcher Wandler sowohl an der Halterung der Messsonde als auch am Objekthalter verbaut werden, wodurch die Schwingungen einerseits von der Messsonde auf das Objekt und andererseits vom Objekt auf die Messsonde übertragen werden. Das in diesem Dokument offenbarte Verfahren wird zwar zur qualitativen Analyse von Federbalken genutzt, stellt aber anschaulich dar, dass Schwingungen sowohl in Fluiden als auch berührungslos über ein gasförmiges Medium vom Objekt auf die Messsonde übertragen werden können.

Im umgekehrten Fall, wie in der EP 3 349 018 A1 beschrieben, tritt die Spitze der Messsonde mit der Objektoberfläche in Kontakt, wodurch auf diese zusätzlich abstoßende Kräfte wirken und parallel zur Schwingungsübertragung auch Oberflächeninformationen gesammelt werden können. Dabei werden Schwingungen der Messsonde dadurch detektiert, dass die Rückseite des Federbalkens, ungefähr auf Höhe der daran angebrachten Spitze, mit einem Laser bestrahlt und dessen Reflexion von einem optischen Detektor ausgewertet wird. Zudem umfasst eine solche Vorrichtung auch einen piezoelektrischen Wandler, der akustische Signale über die Messsonde an das Objekt weitergibt, wobei aus dem Objekt rückstrahlende Signale sich derart auf die Schwingungen der Messsonde auswirken, dass unter der Oberfläche befindliche Strukturen analysiert werden können. Alternativ kann dieser auch zur Detektion der Schwingungen der Messsonde verwendet werden, wodurch die Vorrichtung ohne eine Laserquelle auskommen würde.

In der EP 3 543 712 A1 ist eine Vorrichtung beschrieben, welche unter Nutzung des fotothermischen Effektes eine Anregungsquelle, insbesondere einen Laser, vorsieht, um einen Federbalken einer Messsonde in Schwingung zu versetzen. Hierbei kann eine Spitze der Messsonde sowohl berührungslos als auch in Kontakt mit der Objektoberfläche arbeiten. Für eine Detektion der Schwingungen der Messsonde ist ein optischer Detektor vorgesehen, welcher von der Messsonde reflektierte Laserpulse einer weiteren Laserquelle erkennt, wobei die Aufgabe der Laserquelle auch von der Anregungsquelle übernommen werden kann.

WO 2021/028174 veröffentlicht eine AFM-Messsonde, die mit einem Wandler auf einer Oberseite eingesetzt wird, wobei durch einen Laserstrahl der photoakustische Effekt genutzt und der Wandler zum Aussenden von Ultraschallsignalen angeregt werden soll.

US 5,319,977 offenbart einen Mikroskopieaufbau mit einer Messsonde und darauf angebrachtem Dünnschichtwandler.

US 9,482,691 B1 beschreibt den Einsatz von Mehrfachquantentöpfen zum Aussenden von Laserlicht.

Der Erfindung liegt die Aufgabe zugrunde, eine Messsonde der eingangs genannten Art anzugeben, mit welcher bei geringen Veränderungen der Messsonde ein Aussenden, Übertragen und Detektieren von akustischen Signalen mit hoher Frequenz und hoher Güte erfolgen kann.

Darüber hinaus ist es Aufgabe der Erfindung, ein Verfahren der eingangs genannten Art anzugeben, mit welcher selbst bei einfachem apparativen Aufbau eine Messung mit hoher lateraler und axialer Auflösung möglich ist.

Die erste Aufgabe wird gemäß Anspruch 1 dadurch gelöst, dass bei einer Messsonde der eingangs erwähnten Art der Wandler aus mehreren Schichten aufgebaut ist, wobei zumindest eine Schicht zur Aussendung von akustischen Signalen anregbar ist und die Spitze ausgebildet ist, um akustische Signale auf das Objekt zu übertragen.

Ein hierdurch erzielter Vorteil kann darin gesehen werden, dass ein solcher mehrschichtiger Wandler direkt auf das Substrat und/oder auf die Spitze aufgebracht werden kann. Zudem kann dieser durch physikalische oder chemische Gasphasenabscheidung, insbesondere durch Molekularstrahlepitaxie, so dünn ausgebildet sein, dass die ursprüngliche Funktion der Messsonde erhalten bleibt. Dementsprechend wird die Messsonde durch Aufbringen der Wandlerschichten nicht, oder nur in geringem Maße, in deren Flexibilität und damit auch nicht wesentlich im Schwingungsverhalten beeinträchtigt, weshalb diese mit der üblichen Präzision zur Vermessung der Topographie eines Objektes verwendet werden kann.

Darüber hinaus bietet die Schichtstruktur des Wandlers die Möglichkeit, nicht nur eine anregbare Schicht zur Aussendung von akustischen Signalen, sondern mehrere solcher Schichten vorzusehen, wobei diese bei der Signalaussendung miteinander in Wechselwirkung treten können. Alternativ können diese Schichten auch zur Aussendung akustischer Signale mit voneinander abweichender Frequenz und Polarisation ausgebildet sein, sodass diese Informationen zu verschiedenen Oberflächenbereichen, insbesondere in unterschiedlichen Tiefen des Objektes, liefern und somit unterschiedliche Eigenschaften des Objektes mit ein und derselben Messsonde detektierbar sind. Generell müssen die akustischen Signale jedoch in erster Linie von der aussendenden Wandlerschicht zum Objekt transportiert werden. Diese Aufgabe wird von der Spitze übernommen, wobei die akustischen Signale jedoch nicht nur übertragen, sondern auch auf eine Kontaktfläche mit dem Objekt fokussiert werden und durch die hohe Frequenz im Objekt fokussiert bleiben. Dementsprechend wird durch die Spitze eine hohe räumliche Auflösung bei der Vermessung der Oberfläche und oberflächennahen Bereichen des Objektes sichergestellt.

Der Wandler kann insbesondere auch oberhalb der Spitze angeordnet bzw. abgeschieden sein, erstreckt sich somit, insbesondere flächig, senkrecht zu einer Längsachse, die durch die Spitze definiert wird. Die Spitze kann dabei als Konus oder nach unten gerichtete Pyramide oder als Kegelstumpf oder dergleichen ausgebildet sein. Die Spitze kann mittelbar oder unmittelbar vom Substrat getragen sein. Liegt der Wandler oberhalb der Spitze bzw. deren Verlängerung, ergeben sich kurze Wege für die Leitung akustischer Signale für die Anregung. Darüber hinaus bleibt das Substrat bzw. der Cantilever dann funktional weitgehend unbeeinflusst.

Zweckmäßigerweise weist das Substrat eine Dicke zwischen 0,2 µm und 3 µm auf. Ist der Wandler auf dem Substrat und nicht direkt auf oder in der Spitze angebracht, so müssen die ausgesandten akustischen Signale das Substrat und die Spitze durchdringen, um zum Objekt zu gelangen. Dementsprechend kann es bei dicken Substraten und hohen Frequenzen zur Dämpfung der ausgesandten akustischen Signale kommen, womit sowohl ausgesandte als auch reflektierte akustische Signale in deren Intensität beeinflusst werden würden.

Zudem ist es zweckmäßig, das Substrat aus einem elastischen Material zu bilden, sodass die Messsonde für sämtliche Betriebsmodi eines handelsüblichen Rasterkraftmikroskops genutzt werden kann. Daher ist das Substrat bevorzugt aus Silicium und/oder Siliciumnitrid (Si₃N₄) gefertigt, wodurch dieses trotz hoher Flexibilität besonders widerstandsfähig gegen mechanischen Verschleiß ausgebildet ist. Darüber hinaus bietet Silicium die Möglichkeit, große Teile elektromagnetischer Strahlung mit einer Wellenlänge <1 µm zu absorbieren und/oder zu reflektieren, wobei zugleich eine hohe Durchlässigkeit für Strahlung mit einer Wellenlänge >1 µm besteht. Bei Verwendung von Si₃N₄ erschließt sich ein größerer Bereich der Durchlässigkeit, da dieses auch im optischen Wellenlängenbereich von 400 nm bis 1 µm eine hohe Durchlässigkeit aufweist, wodurch ein Anwendungsbereich erhöht wird. Folglich eröffnet die Anwendung dieses Materiales auch die Möglichkeit, Laser mit kleineren Wellenlängen zu verwenden. Alternativ können auch Halbleiter mit großen Bandlücken, wie beispielsweise Aluminiumnitrid (AIN), Galliumnitrid (GaN) und Siliciumcarbid (SiC), zur Fertigung des Substrates verwendet werden, da diese eine ähnliche Durchlässigkeit aufweisen und akustische Wellen nur in geringem Ausmaß dämpfen. Um eine Strahlungsquelle als Anregungsquelle mit einer entsprechenden Genauigkeit auf das Substrat ausrichten zu können, ist dieses bevorzugt zwischen 10 µm und 80 µm breit ausgebildet und weist im Wesentlichen eine rechteckige, dreieckige oder trapezförmige Grundform auf. Hierdurch kann eine Ausrichtung und damit eine Fokussierung der Strahlungsquelle auf besonders einfache Weise erfolgen. Im Allgemeinen wird das Substrat, und damit auch die Messsonde, an einem distalen Ende in einem Rasterkraftmikroskop befestigt, wobei die Spitze im Regelfall an einem gegenüberliegenden Ende des Substrates angebracht und eine Strahlungsquelle wie ein Laser auf einen Punkt des Substrates nahe der Spitze ausgerichtet ist.

Es ist von Vorteil, wenn die Spitze eine Höhe zwischen 1,0 µm und 15 µm, bevorzugt zwischen 1,5 µm und 10 µm, insbesondere zwischen 2,0 µm und 8,0 µm, aufweist. Hierbei ist die Spitze für gewöhnlich kegelförmig mit einer kreisförmigen, quadratischen, rechteckigen oder vieleckigen Grundfläche ausgebildet und auf der Unterseite des Substrates angebracht. In einer alternativen Variante kann die Spitze auch einen Teil des Substrates darstellen und dieses somit einteilig ausgebildet sein. Dementsprechend wird auch die Spitze bevorzugt aus Silicium, Si₃N₄, AIN, GaN und/oder SiC gebildet, wobei diese auch mehrschichtig aufgebaut sein kann. Dabei bietet sich die Möglichkeit, den Wandler in einen Teil der Spitze, vorzugsweise in der dem Objekt näher liegenden Hälfte, zu integrieren. Durch die spezielle Form der Spitze können vom Wandler ausgesandte akustische Signale zum Objekt hin fokussiert werden. Dabei besteht insbesondere zwischen der Fokussierung der Strahlungsquelle, der Höhe der Spitze und einem Öffnungswinkel der Spitze eine Wechselwirkung, wobei eine Änderung eines Parameters zur Anpassung der anderen beiden Parameter führen kann. Wird bei einer vergleichsweise hohen Spitze ein kleiner Öffnungswinkel gewählt, so kann an den Wänden der Spitze eine Umwandlung der die Spitze durchtretenden Signale in andere Modenformen erfolgreich reduziert werden. Alternativ kann aber auch die Fokussierungsfläche der Strahlungsquelle kleiner gewählt werden und damit bei gleichbleibendem Öffnungswinkel die Höhe der Spitze reduziert werden. Durch diese Wechselwirkung wird eine Totalreflexion der Strahlung innerhalb der Spitze sichergestellt, sodass ein Intensitätsverlust der eintretenden Strahlung besonders gering gehalten werden kann. Zudem können auf diese Weise die fokussierenden Eigenschaften der Spitze nicht nur für die den Wandler anregende Strahlung, sondern auch für die vom Wandler ausgesandten akustischen Signale genutzt werden. Folglich verringert sich der zurückgelegte Weg der akustischen Signale in der Spitze, womit deren maximale Eindringtiefe in das Objekt erhöht wird.

Es hat sich bewährt, dass die Spitze am spitz zulaufenden Ende abgeflacht mit einem Öffnungswinkel zwischen 5° und 40°, bevorzugt zwischen 15° und 35°, ausgebildet ist. Der Öffnungswinkel ergibt sich aus der gedachten Verlängerung der Seitenfläche(n). In Abhängigkeit vom Öffnungswinkel und/oder einer unterschiedlich großen Kontaktfläche zwischen Spitze und Objekt ergibt sich eine unterschiedliche Interaktion der vom Wandler generierten akustischen Wellen mit dem Objekt. Hierbei konnte festgestellt werden, dass Kontaktflächen, die um ein Vielfaches größer als die Wellenlänge der ausgesandten akustischen Signale sind, zu einer quasi-eindimensionalen Propagation dieser Signale in das Objekt führen. Dementsprechend werden die akustischen Signale in der Spitze nicht nur so fokussiert, dass sich ein hohes Signal-Rausch-Verhältnis bei der Vermessung von tief unter der Oberfläche verborgenen Strukturen ergibt, sondern bleiben auch während der Propagation im Objekt fokussiert. Somit ergibt sich bei diesem Aufbau auch eine hohe Intensität der reflektierten Signale und eine hervorragende räumliche Auflösung der unter der Oberfläche befindlichen Strukturen. Wird die Kontaktfläche in einer Größe gewählt, die kleiner oder gleich der Wellenlänge der ausgesandten akustischen Signale ist, resultiert daraus eine kugelförmige Ausbreitung der Signale im Objekt. Hierdurch können oberflächennahe Eigenschaften und/oder Strukturen des Objektes zwar mit hoher Genauigkeit detektiert werden, jedoch eignet sich diese Methode nur bedingt zur Detektion von Strukturen, die tief unter der Oberfläche verborgen sind. Folglich verringert sich durch die zu klein gewählte Kontaktfläche die Eindringtiefe der Signale, wodurch sowohl die räumliche Auflösung der tieferliegenden Strukturen als auch die Intensität der in das Objekt übertragenen Signale verloren geht. Letzteres ist der kugelförmigen Ausbreitung der Signale im Objekt geschuldet, durch welche Signale nicht zur Spitze zurück reflektiert werden. Dementsprechend können anhand der Wellenlänge der akustischen Signale Öffnungswinkel und Kontaktfläche derart gewählt werden, dass unterschiedliche tief im Objekt verborgene Strukturen selektiv detektierbar sind. Alternativ kann bei gleichbleibender Kontaktfläche die Wellenlänge der akustischen Signale adaptiert werden, um unterschiedlich tief liegende Strukturen zu detektieren.

Erfindungsgemäß ist zumindest eine Schicht als in Propagationsrichtung periodische Struktur, insbesondere als Mehrfachquantentopf, ausgebildet. Hierbei sind die periodischen Strukturen derart ausgebildet, dass diese bei Anregung akustische Signale mit sehr hohen Frequenzen, insbesondere im GHz- bis Terahertz (THz)-Bereich, aussenden. Zudem eignen sich diese periodischen Strukturen auch sehr gut zum Erzeugen von hochfrequenten akustischen Signalen, da durch eine Weite der in der Struktur vorhandenen Töpfe und Barrieren ein Frequenzspektrum der ausgesandten Signale festgelegt werden kann. Beispielsweise wurde für kohärente akustische Phononen mit einer Frequenz von 1 THz in GaN eine Lebensdauer von -140 Pikosekunden gefunden, in welcher eine mittlere Weglänge von ~1 µm zurückgelegt wird. Darüber hinaus wurde für diese Weglängen auch ein geringer Kohärenzverlust nachgewiesen, sodass beim Übertragen solcher Signale von einem geringen Dämpfungseffekt ausgegangen werden kann.

Es ist von Vorteil, wenn der Mehrfachquantentopf aus einer Überstruktur zumindest zweier Materialien, bevorzugt GaN und Indiumnitrid (InN), gebildet ist, sodass dieser bei Anregung ein Wellenpaket kohärenter Schallquanten aussendet. In der Überstruktur wird der inverse piezoelektrische Effekt zum Aussenden von Wellenpaketen kohärenter Schallquanten genutzt, indem eine Anregungsquelle, beispielsweise ein Laser, mit größeren Photonenenergien als die elektronische Bandlücke in den Quantentöpfen genutzt wird, um Ladungsträger anzuregen, welche ein intrinsisches piezoelektrisches Feld abschirmen. Letzteres entsteht durch intrinsische Dehnung der nicht ganz passgenauen Gitterstrukturen der beiden in der Überstruktur gewachsenen piezoelektrischen Materialien. Somit wird durch die Anregungsdauer und die Periode der Überstruktur die Wellenlänge der Wellenpakete kohärenter Schallquanten und in weiterer Folge deren Frequenz bestimmt. Zum Erhöhen der Frequenz der ausgesandten Wellenpakete kohärenter Schallquanten werden Anregungsquellen mit besonders kurzen Anregungspulsen, insbesondere Femtosekundenlaser, verwendet. In der gegenständlichen Messsonde werden bevorzugt InGaN/GaN-Überstrukturen mit einer Periode von beispielsweise 8 nm als Mehrfachquantentöpfe verwendet, da diese durch Femtosekundenlaser zum Aussenden von Wellenpaketen kohärenter Schallquanten mit einer Zentralfrequenz von 1 THz angeregt werden können. Passt man die Periode nun so an, dass Wellenpakete kohärenter Schallquanten mit einer Frequenz von 0,1 THz ausgesandt werden, ergibt sich eine Lebensdauer von mehr als 10 ns, wodurch sich bei einer Laufstrecke von einigen Mikrometern ein ausreichend geringer Verlust an Kohärenz der vom Objekt zurückgestrahlten Wellenpakete ergibt. Dabei hängt der Verlust an Amplitude und Kohärenz der Wellenpakete jedoch stark vom Objekt selbst ab, sodass dieser auch beliebig groß sein kann.

Es hat sich bewährt, dass eine Vorrichtung zum Untersuchen von Oberflächenbereichen eines Objektes, insbesondere durch Abtasten von Oberflächenbereichen des Objektes, zumindest eine Anregungsquelle und eine erfindungsgemäße Messsonde umfasst, wobei die Messsonde einen Wandler zur Aussendung von akustischen Signalen aufweist, welcher aus mehreren Schichten aufgebaut ist, wobei zumindest eine Schicht durch die Anregungsquelle zur Aussendung eines akustischen Signales anregbar ist. Hierbei ist die Anregungsquelle bevorzugt derart ausgebildet, dass diese elektromagnetische Strahlung abgibt, welche nicht nur von der Oberfläche des Substrates oder des Wandlers reflektiert und von einem Fotodetektor erfasst wird, sondern auch zumindest eine Schicht des Wandlers derart anregt, dass diese akustische Signale aussendet, die über die Spitze auf das Objekt übertragen werden. Hierbei werden durch die Anregungsquelle die Multiquantentöpfe der Schicht angeregt und Wellenpakete kohärenter Schallquanten ausgesandt, wobei diese über die Spitze fokussiert werden und zur Detektion von verborgenen Strukturen unter der Oberfläche des Objektes dienen. In einer solchen Vorrichtung befindet sich das Objekt auf einem Probentisch und wird von der darüberliegenden Messsonde abgerastert. Der Rastervorgang erfordert eine Justierung in x-, y- und z-Richtung und kann auf zwei Arten stattfinden: Entweder der gesamte Messsondenaufbau umfassend Messsondenhalter, Messsonde, Anregungsquelle und Detektor wird bewegt und rastert die Oberfläche des Objektes ab oder der Probentisch bewegt das Objekt unter dem stationären Messsondenaufbau. Erstere Variante bringt den Vorteil mit sich, dass die zu untersuchenden Objekte lediglich in die Vorrichtung einbringbar sein müssen und keine weiteren Anforderungen an deren Form und Größe gestellt werden. Zweitere Variante erfordert lediglich eine piezoelektrische Bewegungseinheit für den Probentisch, vereinfacht gegenüber der ersten Variante den Aufbau der Vorrichtung und ist zudem weniger fehleranfällig. Obwohl die Vorrichtung in beiden Varianten ausgeführt sein kann, kommt die zweite Variante bevorzugt zum Einsatz.

Zweckmäßigerweise ist die Anregungsquelle zur Aussendung von, bevorzugt femtosekundenlangen, Laserpulsen ausgebildet. Dadurch werden von der zumindest einen anregbaren Schicht des Wandlers besonders hochfrequente Wellenpakete kohärenter Schallquanten, insbesondere im THz-Frequenzbereich, ausgesandt. Zudem können die von den Mehrfachquantentöpfen ausgesandten Wellenpakete kohärenter Schallquanten durch eine variable Periodenlänge des Übergitters der Mehrfachquantentöpfe an das zu untersuchende Material angepasst werden, wobei das Augenmerk insbesondere auf der Eindringtiefe der Wellenpakete kohärenter Schallquanten in das Objekt liegt.

Es ist von Vorteil, wenn die Anregungsquelle als gepulster Festkörperlaser, bevorzugt als Titan:Saphir-Laser, besonders bevorzugt als Erbium (Er)-, Ytterbium (Yb)- oder Neodym (Nd)-dotierter Faserlaser, ausgebildet ist. Hierbei sind die bevorzugten Varianten des Festkörperlasers derart ausgebildet, dass diese Laserpulse in einem Wellenlängenbereich erzeugen können, der von den aus Silicium, Si₃N₄, AIN, GaN und/oder SiC gebildeten Teilen der Messsonde nahezu unbeeinträchtigt transmittiert wird. Im Falle dieser Materialien findet die Transmission von Strahlung ab einer Wellenlänge von über 1 µm statt, weshalb die oben genannten Laserarten als besonders geeignet erachtet werden. Ferner können durch das Phänomen der Frequenzverdopplung auch Laserpulse ausgesandt werden, welche nur die halbe Wellenlänge des ursprünglichen Laserpulses aufweisen. Hierzu wird ein Teilstrahl des Lasers für gewöhnlich auf ein Verdopplungsmaterial, meist doppelbrechende Kristalle, gerichtet, sodass die oszillierende Polarisation in diesen eine Sekundärstrahlung der doppelten Frequenz erzeugt. Sind Brechungsindizes des ursprünglichen Laserpulses und der erzeugten Sekundärstrahlung gleich, so wechselwirken beide über konstruktive Interferenz miteinander und werden in gleicher Richtung emittiert. Als Verdopplungsmaterialien kommen bei ultraschnellen Lasern mit besonders kurzer Pulslänge bevorzugt Kristalle aus Bismutborat (BiB₃O₆,(BBO)), Lithiumiodat (LiIO₃) und periodisch gepoltem Lithiumniobat (LiNbO₃,(PPLN)) zum Einsatz. Der so erzeugte Teilstrahl doppelter Frequenz kann zur Beprobung reflektierter Schallwellen genutzt werden, wohingegen der andere, unveränderte Teilstrahl für die Anregung des Wandlers verwendet wird.

Bevorzugt ist die Anregungsquelle zum Durchführen eines Pump-Probe-Experiments ausgebildet. Dadurch kann eine Anregung der Mehrfachquantentöpfe in zumindest einer Schicht des Wandlers durch den von der Anregungsquelle ausgesandten Pumplaserpuls erfolgen und zeitlich verzögert durch einen Probelaserpuls das Schwingungsverhalten der Messsonde detektiert werden. Hierbei wird die Wellenlänge der Anregungsquelle so gewählt, dass ein Pumplaserpuls in einem Wellenlängenbereich >1 µm liegt und der Probelaserpuls durch Frequenzverdopplung in einem Wellenlängenbereich <1 µm. Bevorzugt kommt ein Er-, Yb- oder Nd-dotierter Faserlaser zum Einsatz, welcher femtosekundenlange Pumplaserpulse mit einer Frequenz von -1,5 µm aussendet. Durch Strahlteilung wird nun ein Teil des Pumplaserpulses genutzt und über eine Verzögerungsstufe zeitlich verzögert auf die Messsonde geleitet. Um eine variable Verzögerung zwischen Pump- und Probelaserpulsen zu erreichen, kann zusätzlich ein Shaker im Verlauf des Pumplaserpulses eingebaut werden, welcher dessen Weglänge stufenweise oder periodisch ändert. Der von der Messsonde reflektierte Probelaserpuls wird mittels Detektor, insbesondere mittels Fotodetektor, analysiert. Folglich wird die zeitliche Auflösung der Messapparatur maßgeblich von der Zeitdifferenz zwischen Pump- und Probelaserpulsen bestimmt, welche unter Anwendung von Femtosekundenlasern üblicherweise bei einigen Femtosekunden bis wenigen Pikosekunden liegt.

Die zweite Aufgabe wird dadurch gelöst, dass durch die Anregungsquelle zumindest eine Schicht des mehrschichtig ausgebildeten Wandlers zur Aussendung von akustischen Signalen angeregt wird, um diese über die Spitze auf das Objekt zu übertragen.

Dabei tritt die Spitze mit dem Objekt in Kontakt, wodurch die akustischen Signale direkt vom Objekt aufgenommen werden und es zu einer Wechselwirkung mit unter der Oberfläche befindlichen Strukturen des Objektes kommt. Hierbei wird als Anregungsquelle eine Laserquelle verwendet, welche zur Aussendung von ultrakurzen Laserpulsen ausgebildet ist. Um die Auflösung des Verfahrens zu optimieren, kann als Anregungsquelle ein Femtosekundenlaser vorgesehen sein, welcher eine Schicht des Wandlers selektiv zum Aussenden akustischer Signale anregt. Dabei werden abgegebene Signale direkt in die Spitze und von dieser weiter auf das Objekt übertragen. Während ein Teil der akustischen Signale von der Oberfläche weiter in das Objekt vordringt, wird der andere Teil von den oben genannten Strukturen reflektiert und findet seinen Weg zurück zur Spitze. Hierbei versetzen diese reflektierten Signale die Spitze, und somit auch die Messsonde, in Schwingung und können darüber detektiert werden. Üblicherweise werden zur Detektion dieser Schwingungen eine Strahlungsquelle und eine Detektoreinheit, meist ein Fotodetektor, genutzt, wobei die Strahlung von der Oberseite des Substrates reflektiert wird, sodass bereits geringste Schwingungen der Messsonde festgestellt werden können. In Kombination mit der besonders kleinen Auflagefläche der Spitze auf dem Objekt, wird somit eine hohe örtliche Auflösung der Messung erzielt. Folglich tritt die Spitze mit der Oberfläche in Kontakt und überträgt nicht nur Informationen über akustisch detektierte Strukturen, welche sich einige Nanometer bis wenige Mikrometer unter der Oberfläche befinden, sondern gibt simultan auch Aufschluss über die Oberflächenstruktur des Objektes. Dabei zählen zu den unter der Oberfläche befindlichen Strukturen neben den Volumen- und Flächendefekten, welche direkt über die Reflexion gemessen werden, auch Linien- und Punktdefekte, welche durch ihren Einfluss auf die Kohärenz und somit der Dämpfung des Signales ortsaufgelöst dargestellt werden können. Ferner kann mithilfe eines erfindungsgemäßen Verfahrens eine Abbildung der elastischen und plastischen Eigenschaften einer oberflächennahen Region, insbesondere mit einer Schichtdicke bis 100 nm, mit einer Ungenauigkeit von nur wenigen Prozenten erstellt werden.

Mit Vorteil werden von der Anregungsquelle abgegebene Laserpulse in Prüf- und Pumplaserpulse getrennt. Somit kann eine einzige Anregungsquelle zum Einsatz kommen, wobei die zuvor beschriebene Frequenzverdoppelung zum Einsatz kommt. Dadurch ergibt sich insofern eine Vereinfachung des Verfahrens, als keine zusätzliche Strahlungsquelle zur Detektion benötigt wird. Hierbei wird von der Anregungsquelle, bevorzugt ein Femtosekundenlaser, ein Pumplaserstrahl mit hoher Wellenlänge, bevorzugt größer als 1 µm, ausgesandt, welcher in weiterer Folge von einem Strahlteiler derart aufgespalten wird, dass ein Teil als Pumplaserpuls und der zweite Teil als Probelaserpuls (bzw. entsprechende Teilstrahlen) weitergeführt werden kann. Während der Pumplaserpuls direkt auf das Substrat und/oder den Wandler der Messsonde geleitet wird, wird der Probelaserpuls über eine Verzögerungsstufe umgelenkt. Dabei trifft der Probelaserpuls derart zeitverzögert an der Messsonde auf, dass zwischen Anregung und Detektion ein Zeitfenster entsteht. Dieses kann durch die Verzögerungsstufe auf die Art des Objektes, zu untersuchende Eigenschaften oder die Art der akustischen Signale aussendenden Wandlerschicht angepasst werden. Alternativ kann zusätzlich ein Shaker im Pfad des Pumplaserpulses eingebaut werden, um einen Zeitabstand zwischen Pump- und Prüflaserpuls periodisch oder stufenweise zu variieren. Hierbei ist das Zeitfenster zwischen Anregung und Detektion maßgeblich, um eine Propagation von akustischen Signalen in das Objekt und eine Reflexion von akustischen Signalen aus dem Objekt in die Messsonde beobachten zu können. Ausgehend davon, dass der Zeitabstand zwischen den Laserpulsen vorzugsweise an die von den Signalen zurückgelegte Weglänge angepasst wird, wird bei der durchschnittlichen Weglänge von einigen Mikrometern im Regelfall eine Verzögerung im Bereich von wenigen Nanosekunden gewählt.

Es hat sich bewährt, dass durch eine Anregung eines in der Schicht enthaltenen Mehrfachquantentopfes, Wellenpakete kohärenter Schallquanten ausgesandt werden. Hierdurch können sowohl die Oberfläche als auch Bereiche, die wenige Mikrometer unter der Oberfläche liegen, analysiert werden. Eine entsprechend hohe vertikale Auflösung resultiert aus der Wellenlänge der Wellenpakete, welche maßgeblich von der Periode der Mehrfachquantentöpfe und deren Anregungszeit durch den Laserpuls abhängig ist. Auf das Objekt übertragene Wellenpakete kohärenter Schallquanten wechselwirken dabei derart mit den suboberflächlichen Strukturen, dass diese in veränderter Form reflektiert und detektiert werden können, womit konkrete Aussagen über eine Vielzahl der Eigenschaften des Objektes getroffen werden können. Hierzu zählen Flächen- und Bulkdefekte sowie Bereiche mit Verteilungen von Punkt- und Liniendefekten, die größer sind als die Wellenlänge der Wellenpakete kohärenter Schallquanten, wobei im Vergleich zu anderen Methoden wenig bis keinerlei Probenvorbereitung notwendig ist, um das Objekt mit einem erfindungsgemäßen Verfahren zu analysieren. Darüber hinaus bedarf es im Gegensatz zu anderen Analysemethoden auch keiner besonderen Atmosphäre, wie Vakuum oder Inertgas, um die Messung auf effiziente Weise durchführen zu können.

Zweckmäßigerweise werden Wellenpakete kohärenter Schallquanten mit einer Frequenz zwischen 0,1 THz und 2 THz, bevorzugt zwischen 0,1 THz und 1,5 THz, besonders bevorzugt zwischen 0,1 THz und 0,5 THz, ausgesandt. Dadurch ergeben sich Wellenpakete kohärenter Schallquanten mit Wellenlängen von wenigen Nanometern. Mit Wellenpaketen kohärenter Schallquanten deren Wellenlänge in der genannten Größenordnung liegt, wird eine zeitliche Auflösung von wenigen Pikosekunden ermöglicht, sodass eine exakte Analyse von dünnen Schichten im Mikro- bis Nanometerbereich stattfinden kann. Hierbei können Eigenschaften wie elastische Konstanten, Dichte, Defekte, Phononendispersion, Phononenoberflächen- und Phononengrenzflächenstreuung eines Materials bestimmt werden. Insbesondere im Hinblick auf die Temperaturentwicklung in mikro- und nanometergroßen Strukturen, welche beispielsweise in der Halbleiterindustrie zur Anwendung kommen, spielt die Oberflächen- und Grenzflächenstreuung der Phononen eine entscheidende Rolle. Durch die Kombination aus hochfrequenten Wellenpaketen kohärenter Schallquanten mit hervorragender vertikaler Auflösung und einer die Wellenpakete kohärenter Schallquanten fokussierenden Spitze der Messsonde wird zudem auch eine sehr gute örtliche Auflösung des Messverfahrens erzielt, sodass eine ortsaufgelöste Abbildung der Eigenschaften des Objektes auf einer Längenskala im Mikro- bis Nanometerbereich durchgeführt werden kann.

Es hat sich bewährt, dass eine Eindringtiefe der Wellenpakete kohärenter Schallquanten in das Objekt durch eine Kontaktfläche der Spitze, welche sich bei vorgegebener Länge und Breite im Befestigungs- bzw. Anschlussbereich des Substrates insbesondere durch deren Öffnungswinkel ergibt, bestimmt wird. Hierdurch kann die Signalübertragung von der Spitze auf das Objekt derart verändert werden, dass Überlagerungen im Signal, hervorgerufen durch rückgestrahlte und ausgesandte Wellenpakete kohärenter Schallquanten, vermindert werden. Zusätzlich kann durch ein Abstimmen der Frequenz der Wellenpakete kohärenter Schallquanten auf die Kontaktfläche der Spitze zwischen quasi-1-D und kugelförmiger Ausbreitung der Wellenpakete kohärenter Schallquanten im Objekt gewählt werden. Hierbei können tiefer unter der Oberfläche liegende Strukturen mithilfe von sich quasi-1-D ausbreitenden Wellenpaketen kohärenter Schallquanten fokussiert beschallt und somit ein hohes Signal-Rausch-Verhältnis erzielt werden. Eine solche Ausbreitung wird dadurch erzielt, dass die Kontaktfläche um ein Vielfaches größer ist als die Wellenlänge der Wellenpakete kohärenter Schallquanten. Unterscheiden sich die Kontaktfläche und die Wellenlänge der Wellenpakete kohärenter Schallquanten nur unwesentlich, so ist mit kugelförmiger Ausbreitung der Wellenpakete kohärenter Schallquanten im Objekt zu rechnen, wodurch eine höhere Auflösung von oberflächennahen Strukturen erzielt wird.

Weitere Merkmale, Vorteile und Wirkungen der Erfindung ergeben sich anhand des nachfolgend dargestellten Ausführungsbeispiels. Die Zeichnungen, auf welche dabei Bezug genommen wird, zeigen:
Fig. 1 eine perspektivische Darstellung einer Messsonde;
Fig. 2 eine Schnittansicht einer Messsonde gemäß Fig. 1;
Fig. 3 eine perspektivische Darstellung einer Vorrichtung;
Fig. 4 eine Schnittansicht einer Vorrichtung gemäß Fig. 3;
Fig. 5 eine perspektivische Darstellung einer Vorrichtung mit einer weiteren Ausführungsform einer Messsonde;
Fig. 6 eine Schnittansicht einer Vorrichtung gemäß Fig. 5;
Fig. 7 und Fig. 8 Diagramme zu Messungen.

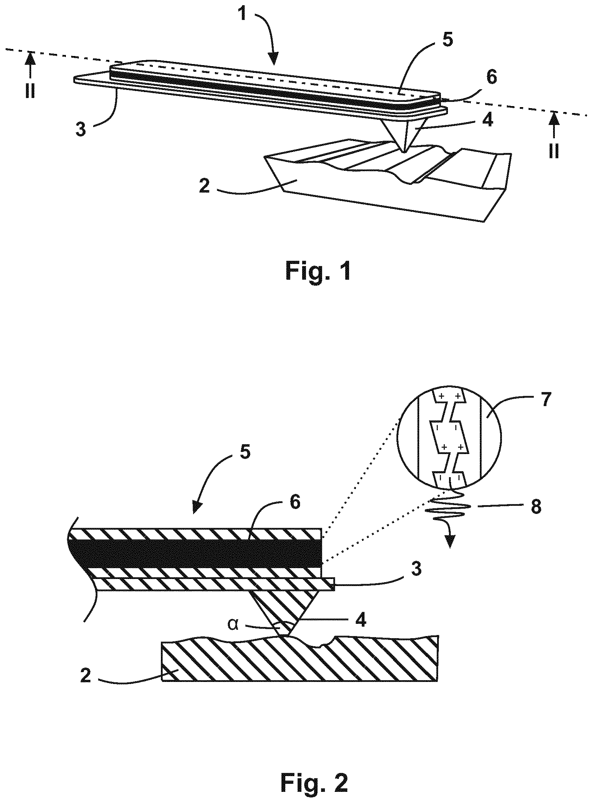

Fig. 1 zeigt eine perspektivische Darstellung einer Messsonde 1 zum Untersuchen von Oberflächenbereichen eines Objektes 2, insbesondere durch Abtasten von Oberflächenbereichen des Objektes 2. Hierbei ist der Aufbau einer Messsonde 1, welche ein Substrat 3, eine Spitze 4 und einen Wandler 5 umfasst, ersichtlich. Das Substrat 3 und die Spitze 4 sind bevorzugt aus Silicium, Si₃N₄, AIN, GaN und/oder SiC gebildet, wodurch eine hohe Abriebfestigkeit der Spitze 4 bei zeitgleich hoher Flexibilität des Substrates 3 sichergestellt ist. Zudem ist klar erkennbar, dass der Wandler 5 aus mehreren Schichten aufgebaut ist, wovon eine Schicht 6 zum Aussenden von akustischen Signalen anregbar ist und dieselbe oder eine Weitere zur Detektion der akustischen Signale dient. Alternativ können auch mehrere Schichten 6 zum Aussenden von akustischen Signalen vorgesehen und der Wandler 5 auch wesentlich flacher, beispielsweise durch Schichten mit einer Dicke von wenigen Nanometern, ausgebildet sein. Der Wandler 5 wird demnach bevorzugt durch physikalische oder chemische Gasphasenabscheidung, insbesondere durch Molekularstrahlepitaxie, auf das Substrat 3 aufgebracht. Hierbei kommen bevorzugt piezoelektrische Materialien wie GaN oder InN oder Mischungen dieser beiden Materialien zum Einsatz. Dabei ist die Schicht 6 zweckmäßigerweise als Überstruktur der beiden vorstehenden Materialien ausgebildet und bildet einen Mehrfachquantentopf 7, welcher zum Aussenden von Wellenpaketen kohärenter Schallquanten 8 angeregt werden kann. Alternativ kann der Wandler 5 auch auf der Spitze 4 oder innerhalb dieser angeordnet sein. Die Spitze 4 ist zudem so ausgebildet, dass diese von der Schicht 6 ausgesandte akustische Signale fokussiert. Hierbei wird die Geometrie der Spitze 4 genutzt, welche im vorliegenden Ausführungsbeispiel einer Pyramide mit quadratischer Grundfläche entspricht. Alternativ können aber auch kegelförmige Spitzen 4 mit kreisförmiger, rechteckiger oder an den Ecken abgerundeter Grundfläche am Substrat 3 angebracht werden. Darüber hinaus ist auch eine einteilige Ausbildung von Substrat 3 und Spitze 4 denkbar, wobei diese für das Substrat 3 und die Spitze 4 das gleiche Ausgangsmaterial vorsehen würde. In der gegenwärtigen Darstellung können Substrat 3 und Spitze 4 aus unterschiedlichen Materialien gebildet sein.

Fig. 2 zeigt eine Schnittansicht einer Messsonde 1 gemäß Fig. 1 entlang der Linie II-II. Hierbei ist die Schichtstruktur des Wandlers 5 gut ersichtlich, wobei die Schicht 6 zur Aussendung von akustischen Signalen anregbar ist. Im kreisförmigen Einsatz ist der strukturelle Aufbau der Schicht 6 dargestellt. Dabei ist zu erkennen, dass die Schicht 6 aus Mehrfachquantentöpfen 7 besteht, welche zum Aussenden von Wellenpaketen kohärenter Schallquanten 8 gebildet sind. Darüber hinaus zeigt die schematische Darstellung der Mehrfachquantentöpfe 7 innerhalb des Kreises exakt eine Periode der in der Schicht 6 enthaltenen Überstruktur, wobei durch Änderung der Überstruktur die Periode der Mehrfachquantentöpfe 7 und damit die Wellenlänge und dadurch die Frequenz der Wellenpakete kohärenter Schallquanten 8 modifiziert werden kann. In dieser Darstellung ist darüber hinaus ersichtlich, dass die Spitze 4 eine abgeflachte Spitze mit größerer Kontaktfläche 11 aufweist, welche durch die Länge der Spitze 4 einerseits und den gezeigten Öffnungswinkel α andererseits definiert wird. Die Kontaktfläche 11 zwischen Objekt 2 und Spitze 4 beeinflusst einerseits die örtliche Auflösung der Messsonde 1 und andererseits die Ausbreitung der Wellenpakete kohärenter Schallquanten 8 im Objekt 2, sodass mit einer Messsonde 1 je nach Verhältnis von Kontaktfläche 11 und Wellenlänge der Wellenpakete kohärenter Schallquanten 8 eine Detektion von tiefliegenden oder oberflächennahen Strukturen des Objektes 2 durchgeführt werden kann.

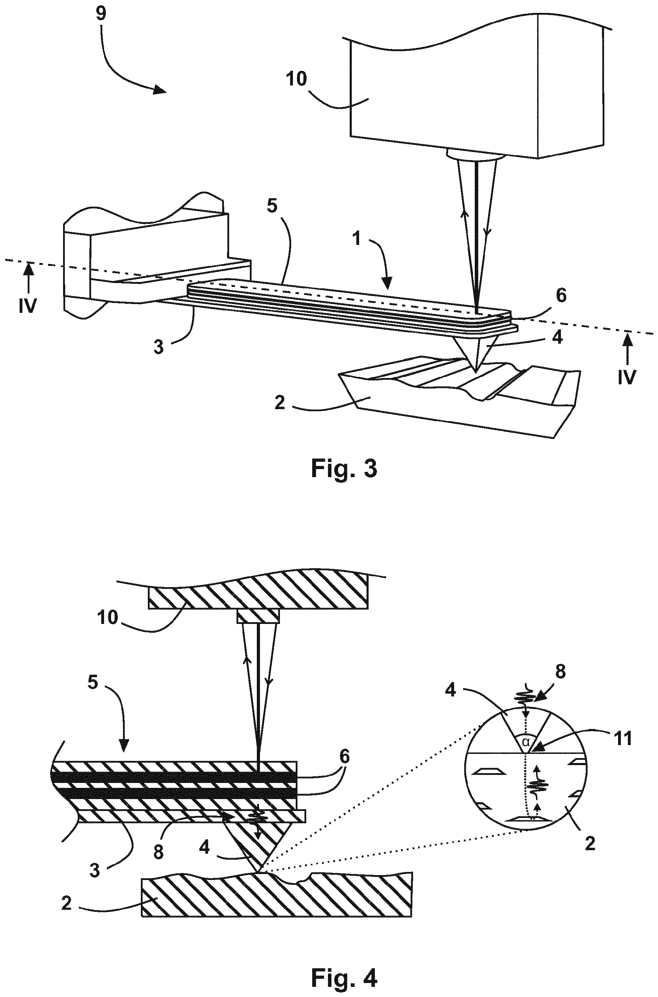

In Fig. 3 ist eine Vorrichtung 9 zum Untersuchen von Oberflächenbereichen eines Objektes 2, insbesondere durch Abtasten von Oberflächenbereichen des Objektes 2, perspektivisch dargestellt. Das Substrat 3 der Messsonde 1 ist an einem, der Spitze 4 gegenüberliegenden Ende an einem Halter fixiert und eine Anregungsquelle 10 ist auf den Wandler 5 gerichtet, welcher in dieser Ausführungsvariante auf dem Substrat 3 angeordnet ist. Im Gegensatz zu einer Messsonde 1 aus Fig. 1 enthält die Schichtstruktur des Wandlers 5 hier zwei Schichten 6, die zur Aussendung und Detektion von Wellenpaketen kohärenter Schallquanten 8 angeregt werden können. Hierzu ist bei bzw. in der Vorrichtung 9 eine Anregungsquelle 10 vorgesehen, welche direkt auf die Oberseite des Wandlers 5 gerichtet ist. Die Anregungsquelle 10 umfasst hierbei einen Femtosekundenlaser, welcher zur Aussendung von Pump- und Probelaserpulsen ausgebildet ist, wobei der Pumplaserpuls als zentraler Strich mit doppelter Strichstärke dargestellt ist und der Probelaserpuls zu diesem einen bestimmten Winkel einschließt und, wie an den Pfeilen der Strahlen ersichtlich, von der Messsonde 1 reflektiert wird. Der Verlauf der Laserpulse dient jedoch lediglich der schematischen Darstellung und deren tatsächlicher Verlauf kann von diesem mitunter stark abweichen. Alternativ kann eine zweite Strahlungsquelle zur Erzeugung von Probelaserpulsen verwendet werden, sodass die Anregungsquelle 10 nur den Pumplaserpuls aussendet. Der reflektierte Probelaserpuls wird von einer Detektoreinheit, welche in dieser Figur nicht dargestellt ist, erfasst, sodass die Analyse des Objektes 2 durch Rückschlüsse auf die Schwingungen und die Position der Messsonde 1 durchgeführt werden kann.

Fig. 4 zeigt eine Schnittansicht einer Vorrichtung 9 gemäß Fig. 3 entlang der Linie IV-IV. Dabei ist ersichtlich, dass der Probelaserpuls teilweise von der Oberfläche des Wandlers 5 reflektiert wird und dessen anderer Teil wie auch der Pumplaserpuls bis zur ersten Schicht 6 in den Wandler 5 eindringt. Dabei regt der Pumplaserpuls die in der Schicht 6 enthaltenen, aber nicht bildlich dargestellten, Mehrfachquantentöpfe 7 zur Aussendung von Wellenpaketen kohärenter Schallquanten 8 an, welche durch das Substrat 3 und die Spitze 4 auf das Objekt 2 übertragen werden. Darüber hinaus können die beiden Schichten 6 so ausgebildet sein, dass sie von unterschiedlichen Pumplaserpulsen anregbar sind und/oder miteinander in Wechselwirkung treten, sodass unterschiedliche Wellenpakete kohärenter Schallquanten 8 ausgesandt werden können. Zudem werden die ausgesandten Wellenpakete kohärenter Schallquanten 8 durch die Spitze 4 fokussiert, sodass die örtliche Auflösung bei der Analyse des Objektes 2 verbessert wird. Im kreisförmigen Einsatz ist die Kontaktfläche 11 zwischen der Spitze 4 und dem Objekt 2 dargestellt. Hierbei ist ersichtlich, wie die Wellenpakete kohärenter Schallquanten 8 von der Spitze 4 über die, vom Öffnungswinkel α mitdefinierte, Kontaktfläche 11 in das Objekt 2 eintreten und von Strukturen unterhalb der Oberfläche des Objektes 2 zumindest zum Teil reflektiert werden. Diese werden in weiterer Folge wieder auf die Spitze 4 und damit die Messsonde 1 übertragen und sind durch den Einfluss des Wellenpaketes kohärenter Schallquanten 8 auf die Reflexion der Schicht 6 mithilfe des Probelaserpulses detektierbar. Durch Anpassung der Kontaktfläche 11 zwischen Spitze 4 und Objekt 2, der Periode der Mehrfachquantentöpfe 7 und der Gesamtdicke der die Mehrfachquantentöpfe 7 bildenden Übergitter in der Schicht 6, kann die Wellenlänge und örtliche Lokalisierung der Wellenpakete kohärenter Schallquanten 8 und somit die örtliche Auflösung in vertikaler Richtung in einem Bereich von mehreren Nanometern bis wenigen Mikrometern festgelegt werden.

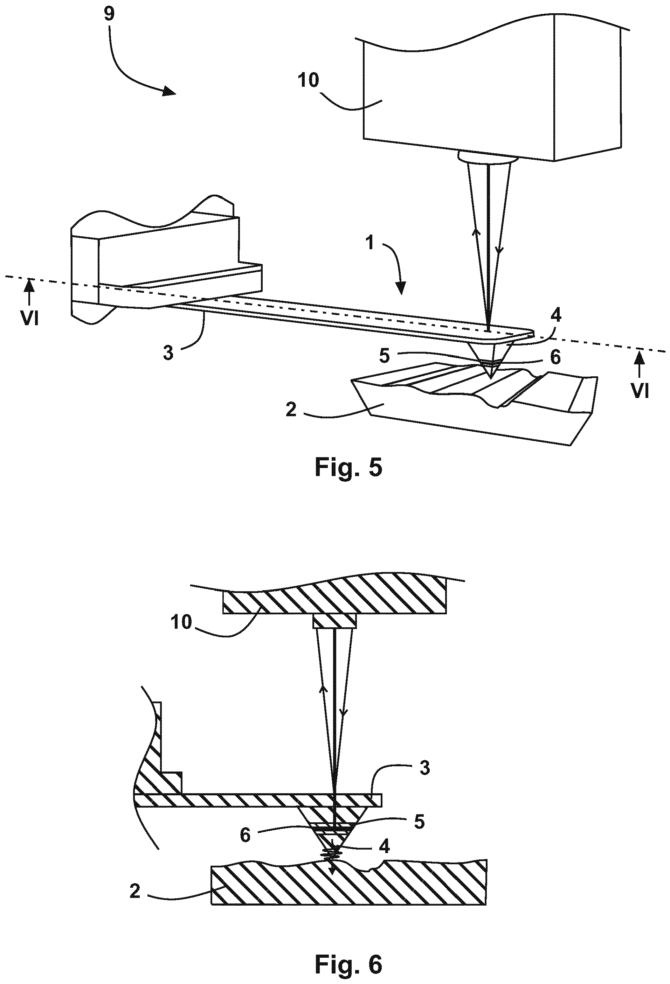

Fig. 5 zeigt eine perspektivische Darstellung der Vorrichtung 9 mit einer weiteren Ausführungsform der Messsonde 1. Hierbei ist der Wandler 5 direkt in die Spitze 4 der Messsonde 1 integriert. Dies bietet den Vorteil, dass der Pumplaserpuls zusätzlich von der Spitze 4 auf die Schicht 6 fokussiert wird. Demnach müssen sowohl Substrat 3 als auch Spitze 4 aus für den Laserpuls durchlässigem Material gebildet sein, wobei die Ausbildung aus Silicium, Si₃N₄, AIN, GaN und/oder SiC bevorzugt Anwendung findet.

Durch diese zusätzliche, auf Totalreflexion basierende, Fokussierung des Pumplaserpulses in der Spitze 4 kann auf eine besonders genaue Ausrichtung der Anregungsquelle 10 verzichtet werden. Zudem wird die Eindringtiefe der Wellenpakete kohärenter Schallquanten 8 durch die gewonnene Nähe zum Objekt 2 erhöht, sodass eine Analyse von noch tieferliegenden Strukturen ermöglicht wird.

Fig. 6 zeigt eine Schnittansicht einer Vorrichtung 9 gemäß Fig. 5 entlang der Linie VI-VI. Dabei ist ersichtlich, dass der Pumplaserpuls der Anregungsquelle 10 das Substrat 3 und einen Teil der Spitze 4 durchdringt, ehe dieser den Wandler 5 zur Anregung der Schicht 6 erreicht. Der Anregungsprozess der in der Schicht 6 enthaltenen Mehrfachquantentöpfe 7 durch den femtosekundenlangen Pumplaserpuls verläuft analog zur Darstellung in Fig. 4.

In dieser Figur ist nur eine Schicht 6 dargestellt, es können aber alternativ auch mehrere Schichten 6 im Wandler 5 angeordnet sein. Hierbei wird der Pumplaserpuls durch die Spitze 4 auf den Wandler 5 fokussiert.

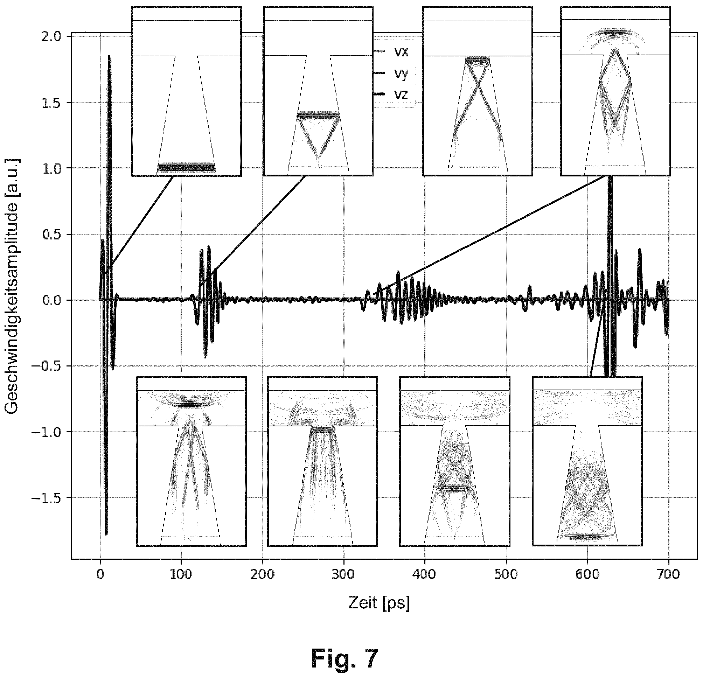

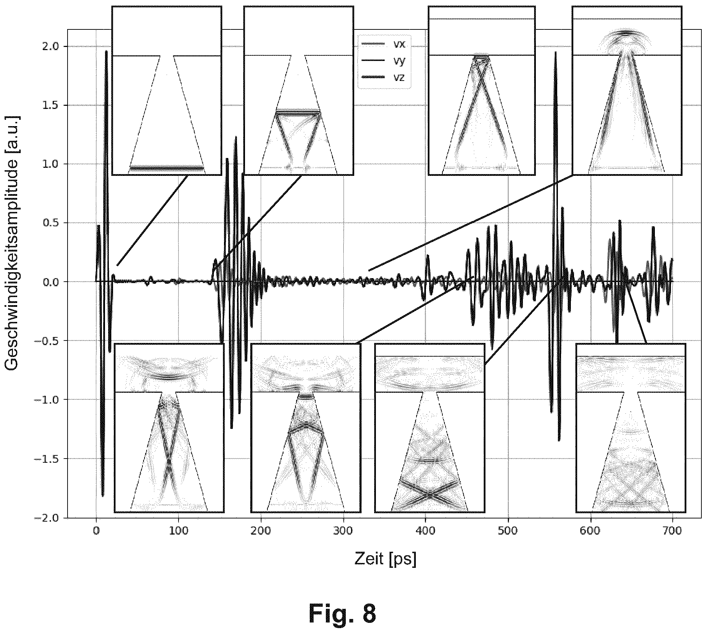

Fig. 7 und Fig. 8 zeigen typische Verläufe von Messungen für Spitzen 4 mit verschiedenen Öffnungswinkeln und Kontaktflächen 11 der Spitzen 4. Für Fig. 7 beträgt der Öffnungswinkel α 20° bei einem Durchmesser der Kontaktfläche 11 von 350 nm und in Fig. 8 30° bei einem Durchmesser der Kontaktfläche 11 von 200 nm. Wie ersichtlich ist, kann über diese Parameter die Propagation der akustischen Wellen in das Objekt 2 und deren Reflexion beeinflusst und damit auf den Anwendungsfall angepasst bzw. optimiert werden.

## Patentansprüche

1. Messsonde (1) zum Untersuchen von Oberflächenbereichen eines Objektes (2), insbesondere durch Abtasten von Oberflächenbereichen des Objektes (2), umfassend ein Substrat (3), eine Spitze (4) zum Wechselwirken mit dem Objekt (2) und einen Wandler (5) zur Aussendung von akustischen Signalen in das Objekt (2), wobei das Substrat (3) die Spitze (4) und den Wandler (5) trägt, wobei der Wandler (5) aus mehreren Schichten aufgebaut ist, wovon zumindest eine Schicht (6) als in Propagationsrichtung periodische Struktur, insbesondere als Mehrfachquantentopf (7), ausgebildet sowie zur Aussendung von akustischen Signalen anregbar ist und wobei die Spitze (4) ausgebildet ist, um akustische Signale auf das Objekt (2) zu übertragen.

2. Messsonde (1) nach Anspruch 1, **dadurch gekennzeichnet, dass** das Substrat (3) eine Dicke zwischen 0,2 µm und 3 µm aufweist.

3. Messsonde (1) nach Anspruch 1 oder 2, **dadurch gekennzeichnet, dass** die Spitze (4) eine Höhe zwischen 1,0 µm und 15 µm, bevorzugt zwischen 1,5 µm und 10 µm, insbesondere zwischen 2,0 µm und 8,0 µm, aufweist.

4. Messsonde (1) nach einem der Ansprüche 1 bis 3, **dadurch gekennzeichnet, dass** die Spitze (4) am spitz zulaufenden Ende abgeflacht mit einem Öffnungswinkel (α) zwischen 5° und 40°, bevorzugt zwischen 15° und 35°, ausgebildet ist.

5. Messsonde (1) nach einem der Ansprüche 1 bis 4, **dadurch gekennzeichnet, dass** der Mehrfachquantentopf (7) aus einer Überstruktur zumindest zweier Materialien, bevorzugt GaN und InN, gebildet ist, sodass dieser bei Anregung ein Wellenpaket kohärenter Schallquanten (8) aussendet.

6. Vorrichtung (9) zum Untersuchen von Oberflächenbereichen eines Objektes (2), insbesondere durch Abtasten von Oberflächenbereichen des Objektes (2), umfassend zumindest eine Anregungsquelle (10) und eine Messsonde (1) nach einem der Ansprüche 1 bis 5, wobei zumindest eine Schicht (6) durch die Anregungsquelle (10) zur Aussendung eines akustischen Signales anregbar ist.

7. Vorrichtung (9) nach Anspruch 6, **dadurch gekennzeichnet, dass** die Anregungsquelle (10) zur Aussendung von, bevorzugt femtosekundenlangen, Laserpulsen ausgebildet ist.

8. Vorrichtung (9) nach Anspruch 6 oder 7, **dadurch gekennzeichnet, dass** die Anregungsquelle (10) als gepulster Festkörperlaser, bevorzugt als Titan:Saphir-Laser, besonders bevorzugt als Er-, Yb- oder Nd-dotierter Faserlaser, ausgebildet ist.

9. Vorrichtung (9) nach einem der Ansprüche 6 bis 8, **dadurch gekennzeichnet, dass** die Anregungsquelle (10) zum Durchführen eines Pump-Probe-Experiments ausgebildet ist.

10. Rasterkraftmikroskopieverfahren zum Untersuchen von Oberflächenbereichen eines Objektes (2), insbesondere mit einer Vorrichtung (9) nach einem der Ansprüche 1 bis 9, wobei eine Messsonde (1), welche ein Substrat (3), einen mehrschichtig ausgebildeten Wandler (5) und eine Spitze (4) umfasst, durch das einseitig befestigte Substrat (3) und die daran angeordnete Spitze (4) mit der Oberfläche des Objektes (2) in Wechselwirkung tritt, während eine Anregungsquelle (10) auf den Wandler (5) gerichtet ist, wobei durch die Anregungsquelle (10) zumindest eine Schicht (6) des mehrschichtig ausgebildeten Wandlers (5), welche als in Propagationsrichtung periodische Struktur, insbesondere als Mehrfachquantentopf (7), ausgebildet ist, zur Aussendung von akustischen Signalen angeregt wird, um diese über die Spitze (4) auf das Objekt (2) zu übertragen.

11. Rasterkraftmikroskopieverfahren nach Anspruch 10, **dadurch gekennzeichnet, dass** von der Anregungsquelle (10) abgegebene Laserpulse in Prüf- und Pumplaserpulse getrennt werden.

12. Rasterkraftmikroskopieverfahren nach Anspruch 10 oder 11, **dadurch gekennzeichnet, dass** durch eine Anregung eines in der Schicht (6) enthaltenen Mehrfachquantentopfes (7), Wellenpakete kohärenter Schallquanten (8) ausgesandt werden.

13. Rasterkraftmikroskopieverfahren nach Anspruch 12, **dadurch gekennzeichnet, dass** Wellenpakete kohärenter Schallquanten (8) mit einer Frequenz zwischen 0,1 THz und 2 THz, bevorzugt zwischen 0,1 THz und 1,5 THz, besonders bevorzugt zwischen 0,1 THz und 0,5 THz, ausgesandt werden.

14. Rasterkraftmikroskopieverfahren nach Anspruch 12 oder 13, **dadurch gekennzeichnet, dass** eine Eindringtiefe der Wellenpakete kohärenter Schallquanten (8) in das Objekt (2) durch eine Kontaktfläche (11) der Spitze (4), welche sich insbesondere durch deren Öffnungswinkel (α) ergibt, bestimmt wird.

## Claims

1. A measuring probe (1) for the examination of surface areas of an object (2), in particular by scanning surface areas of the object (2), comprising a substrate (3), a tip (4) for interaction with the object (2) and a transducer (5) for sending acoustic signals into the object (2), wherein the substrate (3) carries the tip (4) and the transducer (5), wherein the transducer (5) is built up by a plurality of layers, whereof at least one layer (6) is constituted as a structure that is periodic in the propagation direction, in particular as a multi-quantum well (7), and can be excited to send acoustic signals and wherein the tip (4) is designed to transmit acoustic signals onto the object (2).

2. The measuring probe (1) according to claim 1, **characterised in that** the substrate (3) has a thickness between 0.2 µm and 3 µm.

3. The measuring probe (1) according to claim 1 or 2, **characterised in that** the tip (4) has a height between 1.0 µm and 15 µm, preferably between 1.5 µm and 10 µm, in particular between 2.0 µm and 8.0 µm.

4. The measuring probe (1) according to any one of claims 1 to 3, **characterised in that** the tip (4) is designed levelled off at the tapering end with an opening angle (α) between 5° and 40°, preferably between 15° and 35°.

5. The measuring probe (1) according to any one of claims 1 to 4, **characterised in that** the multi-quantum well (7) is formed from a superstructure of at least two materials, preferably GaN and InN, so that when excited it sends a wave packet of coherent sound quanta (8).

6. A device (9) for the examination of surface areas of an object (2), in particular by scanning surface areas of the object (2), comprising at least one excitation source (10) and a measuring probe (1) according to any one of claims 1 to 5, wherein at least one layer (6) can be excited by an excitation source (10) in order to transmit an acoustic signal.

7. The device (9) according to claim 6, **characterised in that** the excitation source (10) is designed to send, preferably femtosecond-long, laser pulses.

8. The device (9) according to claim 6 or 7, **characterised in that** the excitation source (10) is designed as a pulsed solid-state laser, preferably a titanium-sapphire laser, particularly preferably as an Er-, Yb- or Nd-doped fibre laser.

9. The device (9) according to any one of claims 6 to 8, **characterised in that** the excitation source (10) is created by carrying out a pump-probe experiment.

10. A scanning force microscopy process for examining surface areas of an object (2), in particular with a device (9) according to any one of claims 1 to 9, wherein a measuring probe (1), which comprises a substrate (3), a multilayer constituted transducer (5) and a tip (4), enters into an interaction with the surface of the object (2) through the substrate (3) fastened on one side and the tip (4) arranged thereon, while an excitation source (10) is directed onto the transducer (5), wherein at least one layer (6) of the multilayer constituted transducer (5), which is formed as a structure that is periodic in the propagation direction, in particular as a multi-quantum well (7), is excited by the excitation source (10) to send acoustic signals, in order to transmit the latter via the tip (4) onto the object (2).

11. The scanning force microscopy process according to claim 10, **characterised in that** laser pulses delivered by the excitation source (10) are divided into test and pump laser pulses.

12. The scanning force microscopy process according to claim 10 or 11, **characterised in that** wave packets of coherent sound quanta (8) are sent by an excitation of a multi-quantum well (7) contained in the layer (6).

13. The scanning force microscopy process according to claim 12, **characterised in that** the wave packet of coherent sound quanta (8) are sent with a frequency between 0.1 THz and 2 THz, preferably between 0.1 THz and 1.5 THz, particularly preferably between 0.1 THz and 0.5 THz.

14. The scanning force microscopy process according to claim 12 or 13, **characterised in that** a penetration depth of the wave packets of coherent sound quanta (8) into the object (2) is determined by a contact area (11) of the tip (4), which results in particular from its opening angle (α).

## Revendications

1. Sonde de mesure (1), destinée à examiner des zones superficielles d'un objet (2), notamment par balayage de zones superficielles de l'objet (2), comprenant un substrat (3), une pointe (4), destinée à interagir avec l'objet (2) et un convertisseur (5), destiné à émettre des signaux dans l'objet (2), le substrat (3) portant la pointe (4) et le convertisseur (5), le convertisseur (5) étant assemblé en plusieurs couches, dont au moins une couche (6) est conçue sous la forme d'une structure périodique dans la direction de propagation, notamment sous la forme d'un puits quantique multiple (7) et est susceptible d'être excitée pour l'émission de signaux acoustiques et la pointe (4) étant conçue pour transférer des signaux acoustiques sur l'objet (2).

2. Sonde de mesure (1) selon la revendication 1, **caractérisée en ce que** le substrat (3) présente une épaisseur comprise entre 0,2 µm et 3 µm.

3. Sonde de mesure (1) selon la revendication 1 ou 2, **caractérisée en ce que** la pointe (4) présente une hauteur comprise entre 1,0 µm et 15 µm, de préférence entre 1,5 µm et 10 µm, notamment entre 2,0 µm et 8,0 µm.

4. Sonde de mesure (1) selon l'une quelconque des revendications 1 à 3, **caractérisée en ce que** la pointe (4) est aplatie sur l'extrémité effilée, avec un angle d'ouverture (α) compris entre 5 ° et 40 °, de préférence entre 15 ° et 35 °.

5. Sonde de mesure (1) selon l'une quelconque des revendications 1 à 4, **caractérisée en ce que** le puits quantique multiple (7) est constitué d'une superstructure en au moins deux matières, de préférence en GaN et en InN, de sorte que lorsqu'il est excité, celui-ci émette un paquet d'ondes de quanta sonores (8) cohérents.

6. Dispositif (9), destiné à examiner des zones superficielles d'un objet (2), notamment par balayage de zones superficielles de l'objet (2), comprenant au moins une source d'excitation (10) et une sonde de mesure (1) selon l'une quelconque des revendications 1 à 5, au moins une couche (6) étant susceptible d'être excitée par la source d'excitation (10), pour émettre un signal acoustique.

7. Dispositif (9) selon la revendication 6, **caractérisé en ce que** la source d'excitation (10) est conçue pour émettre des impulsions laser, de préférence femtoseconde.

8. Dispositif (9) selon la revendication 6 ou 7, **caractérisé en ce que** la source d'excitation (10) est conçue sous la forme d'un laser à solide pulsé, de préférence d'un laser titane : saphir, de manière particulièrement préférentielle, d'un laser à fibre dopée Er, Yb ou Nd.

9. Dispositif (9) selon l'une quelconque des revendications 6 à 8, **caractérisée en ce que** la source d'excitation (10) est conçue pour réaliser une expérience de pompage d'essai.

10. Procédé de microscopie à force atomique, destiné à analyser des zones superficielles d'un objet (2), notamment à l'aide d'un dispositif (9) selon l'une quelconque des revendications 1 à 9, une sonde de mesure (1), laquelle comprend un substrat (3), un convertisseur (5) conçu en couches multiples et une pointe (4) arrivant en interaction par le substrat (3) fixé sur une face et la pointe (4) placée sur celui-ci avec la surface de l'objet (2), pendant qu'une source d'excitation (10) est orientée sur le convertisseur (5), au moins une couche (6) du convertisseur (5) conçu en couches multiples, laquelle est conçue sous la forme d'une structure périodique dans la direction de propagation, notamment d'un puits quantique multiple (7) étant excitée par la source d'excitation (10) pour l'émission de signaux acoustique, pour transférer ces dernier sur l'objet (2), par l'intermédiaire de la pointe (4).

11. Procédé de microscopie à force atomique selon la revendication 10, **caractérisé en ce que** des impulsions laser délivrées par la source d'excitation (10) sont séparées en impulsions laser d'essai et de pompage.

12. Procédé de microscopie à force atomique selon la revendication 10 ou 11, **caractérisé en ce que** par une excitation d'un puits quantique multiple (7) contenu dans la couche (6), des paquets d'ondes de quanta sonores (8) cohérents sont émis.

13. Procédé de microscopie à force atomique selon la revendication 12, **caractérisé en ce que** des paquets d'ondes de quanta sonores (8) cohérents sont émis à une fréquence comprise entre 0,1 THz et 2 THz, de préférence entre 0,1 THz et 1,5 THz, de manière particulièrement préférentielle, entre 0,1 THz et 0,5 THz.

14. Procédé de microscopie à force atomique selon la revendication 12 ou 13, **caractérisée en ce qu'**une profondeur de pénétration du paquet d'ondes de quanta sonores (8) cohérents dans l'objet (2) est déterminée par une surface de contact (11) de la pointe (4), laquelle résulte notamment de l'angle d'ouverture (α) de celle-ci.
